# FASCICULE DE BREVET EUROPEEN

(11) **EP 3 782 719 B1**
(45) Date de publication et mention de la délivrance du brevet: **20.12.2023**
(21) Numéro de dépôt: 20187828.7
(22) Date de dépôt: 27.07.2020
(51) Int. Cl.: B01D 63/08, B01D 63/14, B01D 67/00, F28D 9/00, F28D 21/00, F28F 13/00, F28F 3/00, F28F 21/06

(54) **PROCÉDÉ DE FABRICATION D'UN ÉLÉMENT D'ÉCHANGE D'UN ÉCHANGEUR À DOUBLE FLUX DE GAZ**
HERSTELLUNGSVERFAHREN EINES AUSTAUSCHELEMENTS EINES DOPPELGASSTROMTAUSCHERS
METHOD FOR MANUFACTURING AN EXCHANGE ELEMENT OF AN EXCHANGER WITH DOUBLE GAS FLOW

(30) Priorité: 01.08.2019 FR 1908822
(43) Date de publication de la demande: 24.02.2021
(73) Titulaire: COMMISSARIAT À L'ÉNERGIE ATOMIQUE ET AUX ÉNERGIES ALTERNATIVES, 75015 Paris (FR)
(72) Inventeur: MARIOTTO, Mathieu, 38054 Grenoble Cedex 09 (FR); BIGARRE, Janick, 38054 Grenoble Cedex 09 (FR)
(74) Mandataire: Brevalex

(56) Documents cités:
- EP-A1- 3 296 678
- JP-A- H0 418 923
- US-A1- 2016 121 005
- US-A1- 2018 292 146
- SCHEITHAUER UWE ET AL: "Additive Manufacturing of Ceramic Heat Exchanger: Opportunities and Limits of the Lithography-Based Ceramic Manufacturing (LCM)", JOURNAL OF MATERIALS ENGINEERING AND PERFORMANCE, ASM INTERNATIONAL, MATERIALS PARK, OH, US, vol. 27, no. 1, 1 août 2017 (2017-08-01), pages 14-20, XP036409288, ISSN: 1059-9495, DOI: 10.1007/S11665-017-2843-Z [extrait le 2017-08-01]

## Description

### DOMAINE TECHNIQUE

L'invention se rapporte au domaine des membranes autoportées pour les transferts thermiques et/ou de masse.

Plus particulièrement, l'invention se rapporte aux membranes autoportées pour les échangeurs, et notamment les échangeurs à double flux de gaz. Les échangeurs à double flux peuvent être mis en oeuvre pour le traitement de l'air, et permettre également une récupération d'énergie. Les membranes concernées dans ces échangeurs sont des membranes imper-respirantes.

### ÉTAT DE LA TECHNIQUE ANTÉRIEURE

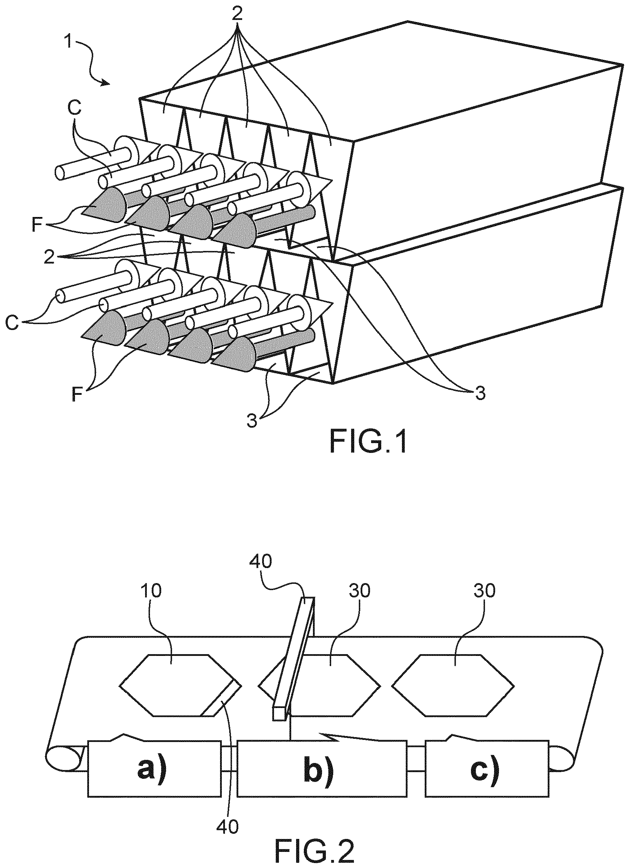

La figure 1 illustre un échangeur thermique 1 à double flux air/air connu de l'état de la technique, et qui comprend une pluralité de premiers canaux 2 de circulation d'air chaud C, et une pluralité de seconds canaux 3 de circulation d'air froid F.

En particulier, les premiers canaux 2 et les seconds canaux 3, à section triangulaire ou carrée, sont agencés selon une configuration dite à « damiers », de sorte que chaque premier canal 2 ait en commun avec un second canal 3 au moins une paroi, dite paroi d'échange 4.

Un tel échangeur n'est toutefois pas satisfaisant.

En effet, les échanges entre l'air chaud et l'air froid, qui se produisent au niveau des parois d'échange 4, sont limités aux seuls phénomènes de conduction thermique, restreignant d'autant l'efficacité énergétique de l'échangeur.

Par ailleurs, les parois d'échange 4 interdisent tout transfert d'humidité de l'un ou l'autre d'un premier et d'un second canal vers l'autre du premier ou du second canal.

Afin de pallier ces problèmes, il a été proposé de mettre en oeuvre des membranes, dites imper-respirantes, perméables à la vapeur d'eau et imperméables aux gaz et à l'eau liquide.

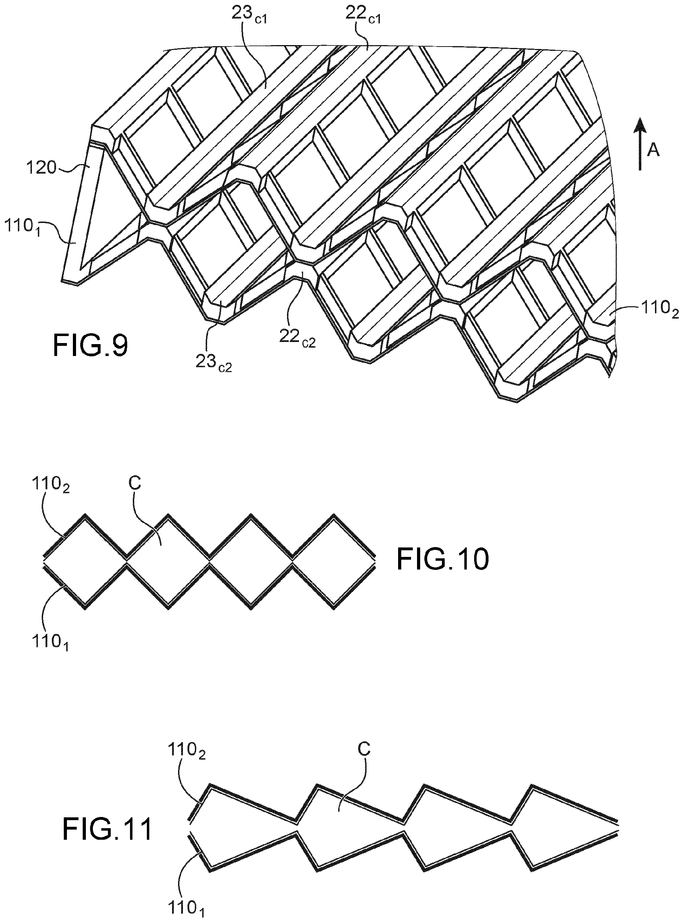

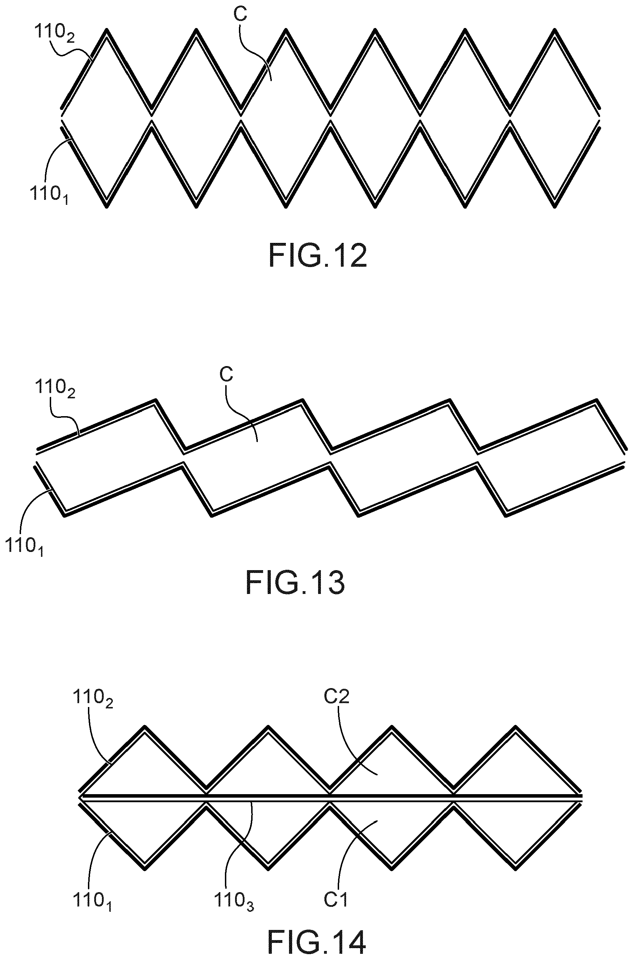

À cet égard, la demande de brevet EP 3296678 divulgue un échangeur dit « enthalpique » formé par des premières et des secondes plaques empilées en alternance selon une direction d'empilement et séparées deux à deux par des membranes imper-respirantes (figures 10a et 10b du document EP 3296678). EP 3 296 678 divulgue un élément d'échange ayant une structure similaire à la fig. 1 de la présente demande. La membrane et la structure de maintien semblent être laminées (fig. 10a-d) ou il semble que la membrane soit coincée entre les structures de maintien (fig. 11,12).

Cet échangeur, bien que satisfaisant dans sa conception, reste néanmoins fastidieux à assembler.

En effet, cet échangeur requiert la mise en oeuvre d'éléments allongés, dit de plaquage, en projection par rapport aux premières et secondes plaques de manière à imposer à chacune des membranes de se conformer à la topologie de la plaque sur laquelle elle repose.

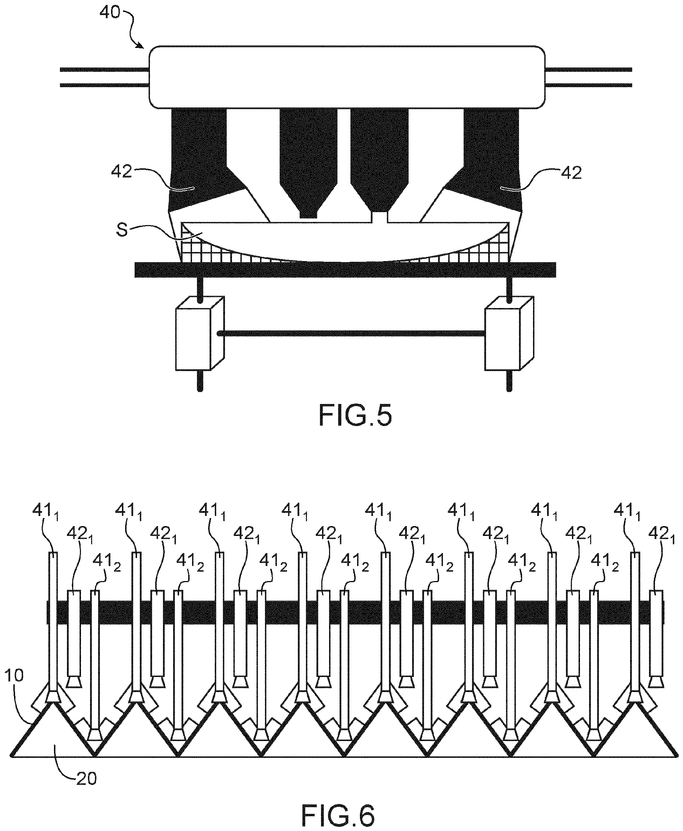

Par ailleurs, ces éléments allongés forment des obstacles à la libre circulation des gaz dans les canaux, et peuvent par conséquent générer des pertes de charge excessives lorsque le cahier des charges de l'appareil les limite. US 2018/292146 divulgue une préparation d'un élément d'échange. Des nervures sont formées par fabrication additive sur un film. Le film est plat (fig. 2) ou ondulé (fig. 6). L'ondulation est formée soit avant la fabrication des nervures soit après. La technique pour former les ondulations sur la membrane n'est pas divulguée.

Ainsi, un but de la présente invention est de proposer un procédé de fabrication d'un élément d'échange d'un échangeur impliquant une structure de maintien et une membrane permettant un assemblage simplifié par rapport aux échangeurs proposés dans l'état de la technique.

Un autre but de la présente invention est de proposer un procédé de fabrication d'un élément d'échange permettant de limiter les pertes de charge.

### EXPOSÉ DE L'INVENTION

Les buts de la présente invention sont, au moins en partie, atteints par un procédé de fabrication d'un élément d'échange d'un échangeur à double flux de gaz, selon la revendication 1. Des modes de réalisation avantageux sont décrits dans les revendications dépendantes.

Le procédé de fabrication permet ainsi d'obtenir une membrane autoportée (maintenu par la structure de maintien) destinée à être mise en oeuvre dans un échangeur à double flux de gaz, et plus particulièrement un échangeur enthlapique.

Plus particulièrement, le procédé selon la présente invention permet d'obtenir une membrane collée sur la structure de maintien, de sorte que le montage ou l'assemblage d'une pluralité de membranes autoportées s'en trouve facilité. Notamment, les organes allongés mis en oeuvre dans la demande de brevet EP 3296678 ne sont plus requis pour le plaquage de la membrane.

Il est également entendu que la structure de maintien adhère à la membrane et maintien cette dernière selon la forme imposée par la face avant.

Selon un mode de mise en oeuvre, la membrane est maintenue sur la face avant du support de mise en forme par succion de sorte que ladite membrane épouse la forme de la face avant lors de l'exécution de l'étape a).

Le plaquage de la membrane par succion sur une face avant du support de mise en forme permet d'imposer différents types de forme à ladite membrane.

Il est, à cet égard, entendu que la membrane présente la souplesse nécessaire pour la rendre conforme à la topologie imposée par la face avant du support de mise en forme.

Selon un mode de mise en oeuvre, la face avant présente, selon un plan perpendiculaire à ladite face et dit plan transversal, présente un profil en ligne brisée qui comprend des creux et des crêtes, les creux et les crêtes se propageant selon une direction, dite direction d'élongation perpendiculaire au plan transversal, selon, respectivement, des lignes de creux et des lignes de crête.

Selon un mode de mise en oeuvre, le profil en ligne brisée présente un signal en triangle.

Selon un mode de mise en oeuvre, l'étape b) comprend la formation de premières bandes sur les lignes de creux et de deuxièmes bandes sur les lignes de crête, et d'organes de liaison reliant les premières et deuxièmes bandes directement consécutives.

Selon un mode de mise en oeuvre, les premières bandes, les deuxièmes bandes et les organes de liaison présentent une épaisseur comprise entre 50 µm et 100 µm.

Selon un mode de mise en oeuvre, l'étape b) par un procédé de projection d'une matière photopolymérisable par une ou plusieurs buses, ladite matière photopolymérisable, projetée, est en ensuite durcie par exposition à au moins une source de rayonnement ultraviolet.

Cette méthode est rapide et simple à mettre en oeuvre.

Selon un mode de mise en oeuvre, l'une ou plusieurs buses comprend des premières buses, des deuxièmes buses, destinée à former, respectivement, les premières bandes, les deuxièmes bandes.

De manière avantageuse, les premières buses et/ou les deuxièmes buses peuvent également être mises en oeuvre pour la formation des organes de liaison.

Selon un mode de mise en oeuvre, l'au moins une source de rayonnement ultraviolet comprend une pluralité de sources de rayonnement ultraviolet. Avantageusement, chaque source de rayonnement ultraviolet parmi ladite pluralité est associée à une première buse et une deuxième buse adjacente à ladite première buse.

La mise en oeuvre d'une pluralité de buses permet d'accélérer l'étape b).

Selon un mode de mise en oeuvre, l'étape b) comprend un procédé stéréo lithographique.

Selon un mode de mise en oeuvre, le support de mise en forme comprend un matériau poreux notamment une céramique ou du liège.

Selon un mode de mise en oeuvre, la membrane est une membrane imper-respirante d'une épaisseur inférieure à 100 µm, avantageusement inférieure à 15 µm, encore plus avantageusement inférieure à 5 µm.

Selon un mode de mise en oeuvre, l'étape b) est précédé d'une étape a1) de traitement de la face libre de la membrane destinée à promouvoir l'adhérence de la structure de maintien sur ladite face libre, ladite étape a1) comprenant notamment un traitement par décharge électrique du type Corona ou plasma.

Selon un mode de mise en oeuvre, l'étape b) est suivie d'une étape d) de traitement de la structure de maintien destinée à protéger ladite structure de maintien de l'humidité, l'étape d) comprend notamment l'application d'un vernis sur ladite structure de maintien.

L'invention concerne également un procédé d'assemblage d'un échangeur à double flux de gaz pourvu d'éléments d'échange fabriqués selon la procédé de fabrication selon la présente invention, les éléments d'échange comprenant des premiers éléments et des deuxièmes éléments, le procédé d'assemblage comprenant l'empilement, en alternance, selon une direction d'empilement, des premiers éléments et des deuxièmes éléments.

Selon un mode de mise en oeuvre, les premiers éléments et les deuxièmes éléments présentent, en section selon un plan transversal auxdits éléments, une forme de ligne brisée, la ligne brisée relative à un premier élément, dite première ligne brisée, comprend des premiers creux et des premières crêtes, se propageant selon une direction, dite direction d'élongation, perpendiculaire au plan transversal, selon, respectivement, des premières lignes de creux et des premières lignes de crête, et la ligne brisée relative à un deuxième élément, dite deuxième ligne brisée, comprend des deuxièmes creux et des deuxièmes crêtes, se propageant selon la direction d'élongation selon, respectivement, des premières lignes de creux et des premières lignes de crête.

Selon un mode de mise en oeuvre, les premières lignes de crête d'un premier élément sont jointes aux deuxièmes lignes de crêtes d'un deuxième élément directement consécutif audit premier élément de sorte qu'une pluralité de canaux soit formée entre ledit premier élément et ledit deuxième élément.

Selon un mode de mise en oeuvre, la première ligne brisée et la deuxième ligne brisée sont agencées pour que les canaux présentent une section de forme carrée ou rectangulaire, ou parallélépipédique.

Selon un mode de mise en oeuvre, le procédé comprend en outre l'assemblage d'un autre élément d'échange, dit troisième élément d'échange, fabriqué selon le procédé selon le procédé de fabrication selon la présente invention, ledit troisième élément étant intercalé lors de l'assemblage entre un premier élément et un deuxième élément, ledit troisième élément étant conformé pour qu'une première pluralité de canaux et une deuxième pluralité de canaux soient formées, respectivement, entre ledit premier élément et ledit troisième élément d'une part, et ledit troisième éléments, et ledit deuxième élément d'autre part.

Selon un mode de mise en oeuvre, l'un ou l'autre du premier élément et du deuxième élément comprend, au niveau de ses bords latéraux, des parois latérales destinées à refermer latéralement les deux canaux latéraux.

### BRÈVE DESCRIPTION DES DESSINS

D'autres caractéristiques et avantages apparaîtront dans la description qui va suivre d'un procédé de fabrication d'un élément d'échange d'un échangeur à double flux de gaz selon l'invention, donnés à titre d'exemples non limitatifs, en référence aux dessins annexés dans lesquels :
La figure 1 est une représentation schématique en perspective d'un échangeur à double flux de gaz connu de l'état de la technique et distribué par la société RECAIR^{®}, l'échangeur comprend notamment une première et une seconde pluralité de canaux destinés, respectivement, à la circulation d'air chaud et d'air froid ;
La figure 2 est une représentation schématique des différentes étapes du procédé de fabrication d'un élément d'échange selon la présente invention ;
La figure 3a est une représentation schématique d'un support de mise en forme en vue selon la face avant ;
La figure 3b est une représentation en coupe selon le plan transversal P_{T} du support de mise en forme de la figure 3a ;
La figure 4 est une représentation schématique d'une membrane reposant sur un support de mise en forme, et sur une face de laquelle est formée une structure de maintien selon un mode de réalisation de la présente invention, le support de mise en forme comprenant notamment sur sa face avant une structuration qui selon un plan de coupe présente un profil en signal triangulaire ;
La figure 5 est une représentation schématique d'un équipement de fabrication additive pourvue d'une pluralité de buses de projection de matière photopolymérisable, et d'une source de rayonnement ultraviolet pour provoquer la polymérisation de ladite matière ;
La figure 6 est un représentation schématique d'un équipement de fabrication additive par projection de matière photopolymérisable mettant en oeuvre différentes type de buses dédiées notamment à la formation, respectivement, des premières bandes, des deuxièmes bandes et des organes de liaison ;
La figure 7 est une représentation schématique, en perspective et partielle, d'une plaque d'échange libérée du support de mise en forme ;
La figure 8 est une représentation schématique, en perspective, d'une section d'un échangeur à double flux de gaz comprenant une alternance de premiers éléments et de deuxièmes éléments empilés en alternance selon une direction d'empilement A;
La figure 9 est une représentation schématique, en coupe, d'un premier élément et d'un deuxième élément empilés selon la direction d'empilement A ;
La figure 10 est une représentation en section transversale de canaux de forme carrée ;
La figure 11 est une représentation en section transversale de canaux en forme de losange ;
La figure 12 est une représentation en section transversale de canaux en forme de diamant ;
La figure 13 est une représentation en section transversale de canaux de forme rectangulaire ;
La figure 14 est une représentation en section transversale de canaux de forme triangulaire.

### EXPOSÉ DÉTAILLÉ DE MODES DE RÉALISATION PARTICULIERS

La présente invention concerne un procédé de fabrication d'un élément d'échange (ou plaque d'échange) d'un échangeur à double flux de gaz et pourvu d'une membrane.

En particulier, le procédé selon la présente invention concerne un procédé de fabrication d'une membrane autoportée, et notamment d'une membrane maintenue par une structure de maintien.

La structure de maintien, selon la présente invention, est formée par une technique de fabrication additive sur la membrane à laquelle une forme est imposée par un support de mise en forme.

Par « fabrication additive », on entend un procédé de fabrication par ajout de matière.

La figure 2 est une représentation schématique des différentes étapes d'un procédé de fabrication d'un élément d'échange susceptibles d'être mises en oeuvre dans le cadre de la présente invention.

Notamment le procédé comprend une étape a) de positionnement et de maintien d'une membrane 10 sur une face avant 21 d'un support de mise en forme 20.

La membrane 10 peut être une membrane imper-respirante d'une épaisseur inférieure à 100 µm, avantageusement inférieure à 15 µm, encore plus avantageusement inférieure à 5 µm.

La membrane 10 peut notamment comprendre une membrane Pebax (dont le point de fusion est de 204 °C) ou une membrane Arnitel (Arnitel^{®} VT3118) ou une membrane Lubrizol (PERMAX230) qui ont chacune un point de fusion compris entre 140 °C et 180 °C).

La membrane 10 peut être maintenue par application d'une succion au niveau de la face avant 21 du support de mise en forme 20 de sorte que ladite membrane épouse la forme de la face avant 21.

Il est entendu que dans la cadre de la présente invention, la membrane 10 présente une souplesse adaptée pour se voir imposer la topologie de la face avant 21.

À cet égard, le support de mise en forme 20 peut, selon une première variante, présenter une porosité permettant le maintien par succion de la membrane, et par exemple présenter un taux de vide, dans la matrice formant le support 20, compris entre 25 % et 75 %.

La porosité peut alors être ajustée de sorte que la surface de contact de la face avant avec la membrane représente 10% à 50% de la zone de contact.

Selon une seconde variante, le support de maintien 20 comprend des perforations permettant également le maintien par succion de la membrane.

Le support de mise en forme 20 peut comprendre une céramique ou du liège. Ces deux types de matériaux sont particulièrement avantageux dans la mesure où ils présentent une porosité intrinsèque.

De manière alternative, le support de mise en forme 20 peut comprendre un métal ou un polymère.

Le support de mise en forme 20 peut être obtenu par une technique de fabrication additive ou par usinage.

La face avant 21 peut être plane ou être structurée.

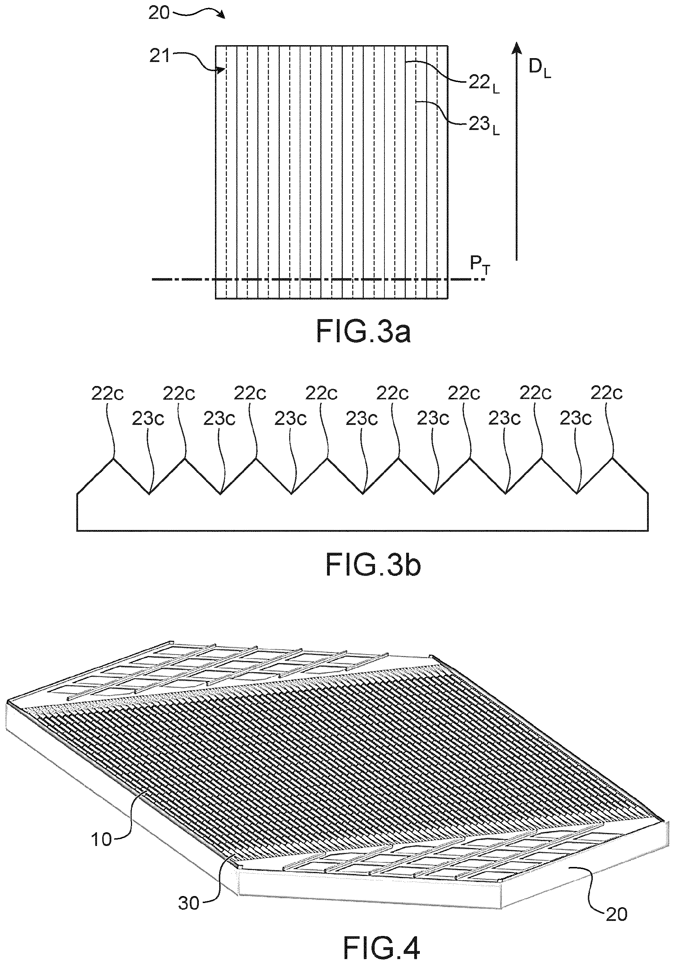

Selon un mode de réalisation particulièrement avantageux, la face avant 21 peut présenter, selon un plan perpendiculaire à ladite face 21, dit plan transversal P_{T}, un profil en ligne brisée qui comprend des crêtes 22c et des creux 23c (figure 3b), les creux et les crêtes se propageant selon une direction, dite direction d'élongation D_{L} perpendiculaire au plan transversal P_{T}, selon, respectivement, des lignes de crête 22 _{L} (en traits pleins) et des lignes de creux 23_{L} (en traits pointillés) (figure 3a).

Il est entendu que les lignes de crête 22_{L} et les lignes de creux 23_{L} sont parallèles entre elles.

Selon ce mode de réalisation, la ligne brisée peut présenter un signal en triangle.

Le procédé de fabrication comprend également une étape b) de formation, par fabrication additive, d'une structure de maintien 30 adhérant sur une face libre de la membrane 10 de mise en forme sur la face avant 21.

La structure de maintien 30 peut notamment comprendre des premières bandes 31 sur les lignes de crête 22_{L} et de deuxièmes bandes 32 sur les lignes de creux 23_{L} parallèles aux premières bandes, et des organes de liaison 33 reliant les premières bandes 31 et les deuxièmes bandes 32 directement consécutives (figure 4).

Les organes de liaison 33 sont des organes présentant une forme généralement allongée, et maintiennent de manière mécanique et solidaire les premières bandes 31 et les deuxièmes bandes 32 immédiatement consécutives.

Les organes de liaison 33 peuvent être, tel que représenté à la figure 4, orientés perpendiculairement aux première bandes 31 et aux deuxièmes bandes 32. Toutefois, toute autre orientation peut être permise. Il peut également être envisagé de mettre en oeuvre des organes de liaison formant des croisillons.

Les premières bandes 31, les deuxièmes bandes 32 et les organes de liaison 33 peuvent présenter une épaisseur comprise entre 50 µm et 100 µm.

La formation de la structure de maintien 30, et plus particulièrement des premières bandes 31, des secondes bandes 32 et des organes de liaison 33, peut impliquer une étape b) qui comprend les étapes suivantes :
b1) une projection d'une matière photopolymérisable par une ou plusieurs buses,
   et
b2) un durcissement de la matière photopolymérisable projetée par exposition à une source de rayonnement ultraviolet.

Selon ces conditions, l'étape b) est exécutée au moyen d'un équipement de fabrication additive 40 (figures 2, et 5), pourvu d'une ou plusieurs buses 41 destinées à projeter la matière photopolymérisable.

L'équipement de fabrication additive comprend également une source de rayonnement ultraviolet 42 agencée pour durcir la matière photopolymérisable.

En fonctionnement, un tel dispositif projette de la matière photopolymérisable sur une face d'un support selon un motif prédéfini, et ladite matière est ensuite exposée au rayonnement ultraviolet afin de provoquer sa polymérisation.

Afin d'améliorer la cadence de formation de la structure en cours de fabrication, et notamment la structure de maintien, l'équipement de fabrication additive peut être pourvu d'une pluralité de buses 41 fonctionnant en parallèle.

En particulier, l'équipement de fabrication additive peut comprendre des premières buses 41₁, et des deuxièmes buses 41₂, destinées à former, respectivement, les premières bandes 31, les deuxièmes bandes 32 (figure 6). Des déplacements latéraux des premières buses 41₁, et/ou des deuxièmes buses 41₂ peuvent également être envisagés pour la formation des organes de liaison 33.

Les premières buses 41₁ et les deuxièmes buses 41₂ sont décalées selon un axe perpendiculaire à la face, et leur distance par rapport à la face avant 21 peut être ajustée de manière individuelle.

De manière avantageuse, les buses 41₁ et les deuxièmes buses 41₂ peuvent également être mobiles selon les directions du plan défini par la face avant 21 du support de mise en forme.

Les étapes b1) et b2) peuvent être répétées autant de fois que nécessaire pour que les premières bandes 31, les deuxièmes bandes 32, et les organes de liaison 33 présentent l'épaisseur désirée.

Selon un mode de mise en oeuvre, au moins une source de rayonnement ultraviolet 42 comprend une pluralité de sources de rayonnement ultraviolet 42₁. Avantageusement, chaque source de rayonnement ultraviolet 42₁ parmi ladite pluralité est associée à une première buse 41₁ et une deuxième buse 41₂ adjacente à ladite première buse.

La matière photopolymérisable peut comprendre une résine distribuée par la société STRATASYS^{®}, et notamment comprendre au moins unes des résines choisie parmi : « High Temperature resin », « Durus resin », une résine de la série DENTAL.

La structure de maintien 30 peut également être formée par tout autre procédé de fabrication additive, et notamment par stéréo lithographie.

Le procédé de fabrication de l'élément d'échange comprend également une étape c) de retrait du support de mise en forme 20 de manière à libérer l'élément d'échange formé par la membrane 10 et la structure de maintien 30.

Il est entendu que la structure de maintien 30 maintien mécaniquement la membrane 10 et forme avec cette dernière un plaque d'échange d'un échangeur de chaleur à double flux de gaz.

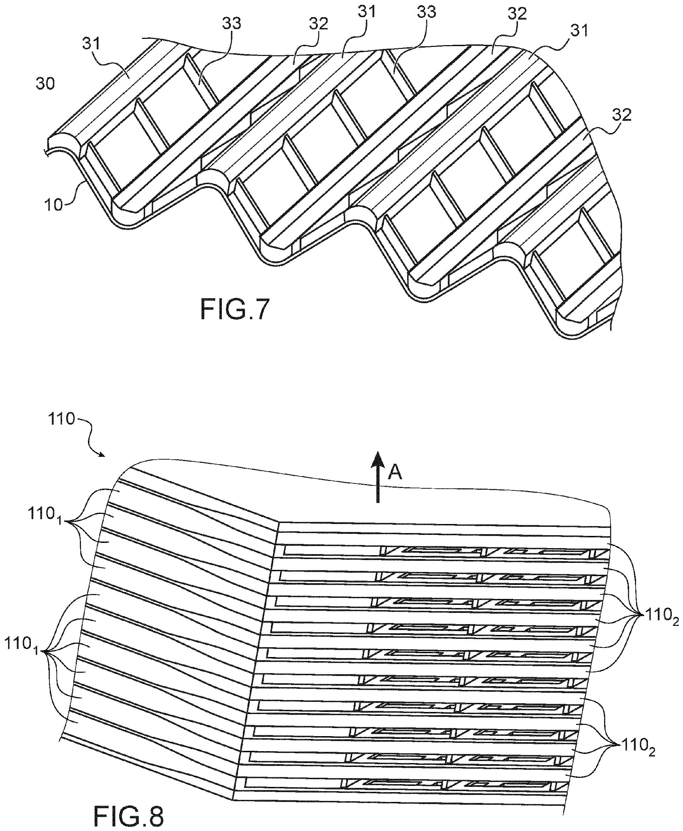

La plaque d'échange est en partie illustrée à la figure 7, et présente une forme généralement plane imposée par la structure de maintien 30 adhérant sur la membrane 10.

À cet égard, le procédé de fabrication peut également comprendre une étape a1), précédant l'étape b), de traitement de la face libre de la membrane 10, et destinée à promouvoir l'adhérence de la structure de maintien 30 sur ladite face libre.

Avantageusement, l'étape a1) peut notamment comprendre un traitement par décharge électrique du type Corona ou plasma.

Le procédé selon la présente invention peut également comprendre une étape d), exécutée après l'étape b) ou l'étape c), de traitement de la structure de maintien destinée à protéger ladite structure de maintien de l'humidité.

En particulier, l'étape d) peut comprendre l'application d'un vernis sur la structure de maintien 30.

La présente invention concerne également un procédé d'assemblage d'un échangeur 100 à double flux de gaz pourvu d'éléments d'échange fabriqués selon la présente invention.

Notamment, ce procédé comprend une étape d'empilement d'éléments d'échange 110. Ces derniers comprennent notamment des premiers éléments 110₁ et des deuxièmes éléments 110₂ empilés en alternance selon une direction d'empilement A (figure 8).

Selon ce procédé d'assemblage, les premiers éléments 110₁ et les deuxièmes éléments 110₂ peuvent présenter, en section selon un plan transversal auxdits éléments, une forme de ligne brisée (figure 9).

En particulier, la ligne brisée relative à un premier élément 110₁, dite première ligne brisée, comprend des premiers creux 23_{c1} et des premières crêtes 22_{c1}, se propageant selon une direction, dite direction d'élongation, perpendiculaire au plan transversal, selon, respectivement, des premières lignes de creux et des premières lignes de crête (figure 9).

De manière équivalente, la ligne brisée relative à un deuxième élément 110₂, dite deuxième ligne brisée, comprend des deuxièmes creux 23_{c2} et des deuxièmes crêtes 22_{c2}, se propageant selon la direction d'élongation selon, respectivement, des premières lignes de creux et des premières lignes de crête (figure 9).

Tel qu'illustré sur la figure 9, les premières lignes de crête d'un premier élément peuvent être jointes aux deuxièmes lignes de crêtes d'un deuxième élément directement consécutif audit premier élément de sorte qu'une pluralité de canaux C soit formée entre ledit premier élément et ledit deuxième élément.

La première ligne brisée et la deuxième ligne brisée peuvent être agencées pour que les canaux C présentent une section de forme carrée (figure 10) ou rectangulaire (figure 13), ou parallélépipédique losange (figure 11) ou parallélépipédique diamant (figure 12).

Selon une variante, le procédé comprend en outre l'assemblage d'un autre élément d'échange, dit troisième élément 110₃ d'échange, fabriqué selon le procédé décrit ci-avant.

Le troisième élément 110₃ est notamment intercalé (figure 14) lors de l'assemblage entre un premier élément 110₁ et un deuxième élément 110₂.

Le troisième élément 110₃ est en particulier conformé pour qu'une pluralité de premiers canaux C1 et une pluralité de deuxièmes canaux C2 soient formées, respectivement, entre ledit premier élément et ledit troisième élément d'une part, et ledit troisième élément, et ledit deuxième élément d'autre part.

Avantageusement, l'un ou l'autre du premier élément et du deuxième élément, par exemple le premier élément, comprend, au niveau de ses bords latéraux B des parois latérales 120 destinées à refermer latéralement les deux canaux latéraux.

Ainsi, la mise en oeuvre d'une étape de fabrication additive permet de simplifier le procédé d'intégration d'une ou plusieurs membranes d'échange dans un échangeur.

Plus particulièrement, le positionnement de la membrane ne nécessite plus la mise en oeuvre des organes allongés considérés dans la demande EP 3296678 pour le plaquage et la mise en forme de ladite membrane.

## Revendications

1. Procédé de fabrication d'un élément d'échange d'un échangeur à double flux de gaz, le procédé comprenant les étapes suivantes :
a) le positionnement d'une membrane (10) sur une face avant (21) d'un support de mise en forme (20), la membrane (10) se conformant à la forme de ladite face avant (21), la membrane (10) étant maintenue sur la face avant (21) du support de mise en forme (20) par succion de sorte que ladite membrane (10) épouse la forme de la face avant (21) ;
b) la formation, par fabrication additive, d'une structure de maintien (30) adhérant sur une face libre de la membrane (10) mise en forme sur la face avant (21) ;
c) le retrait du support de mise en forme (20) de manière à libérer l'élément d'échange formé par la membrane (10) et la structure de maintien (30),
dans lequel la face avant (21) présente, selon un plan perpendiculaire à ladite face et dit plan transversal, un profil en ligne brisée qui comprend des creux (23c) et des crêtes (22c), les creux (23c) et les crêtes (22c) se propageant selon une direction, dite direction d'élongation perpendiculaire au plan transversal, selon, respectivement, des lignes de creux (23L) et des lignes de crête (22L), avantageusement, le profil en ligne brisée présente un signal en triangle.

2. Procédé selon la revendication 1, dans lequel l'étape b) comprend la formation de premières bandes (31) sur les lignes de crête (22L) et de deuxièmes bandes (32) sur les lignes de creux (23L), et d'organes de liaison (33) reliant les premières et deuxièmes bandes (32) directement consécutives, avantageusement, les premières bandes (31), les deuxièmes bandes (32) et les organes de liaison (33) présentent une épaisseur comprise entre 50 µm et 100 µm.

3. Procédé selon la revendication 2, dans lequel l'étape b) est exécutée par un procédé de projection d'une matière photopolymérisable par une ou plusieurs buses (41), ladite matière photopolymérisable, projetée, est ensuite durcie par exposition à au moins une source de rayonnement ultraviolet (42₁).

4. Procédé selon la revendication 3, dans lequel l'une ou plusieurs buses (41) comprend des premières buses (411) et des deuxièmes buses (412) destinée à former, respectivement, les premières bandes (31) et les deuxièmes bandes (32), avantageusement, les premières buses et/ou les deuxièmes buses sont également mises en oeuvre pour la formation des organes de liaison.

5. Procédé selon la revendication 4, dans lequel, l'au moins une source de rayonnement ultraviolet comprend une pluralité de sources de rayonnement ultraviolet, avantageusement, chaque source de rayonnement ultraviolet parmi ladite pluralité est associée à une première buse et une deuxième buse adjacente à ladite première buse.

6. Procédé selon l'une des revendications 1 à 5, dans lequel le support de mise en forme (20) comprend un matériau poreux notamment une céramique ou du liège.

7. Procédé selon l'une des revendications 1 à 6, dans lequel la membrane (10) est une membrane (10) imper-respirante d'une épaisseur inférieure à 100 µm, avantageusement inférieure à 15 µm, encore plus avantageusement inférieure à 5 µm.

8. Procédé selon l'une des revendications 1 à 7, dans lequel l'étape b) est précédé d'une étape a1) de traitement de la face libre de la membrane (10) destinée à promouvoir l'adhérence de la structure de maintien (30) sur ladite face libre, ladite étape a1) comprenant notamment un traitement par décharge électrique du type Corona ou plasma.

9. Procédé selon l'une des revendications 1 à 8, dans lequel l'étape b) est suivie d'une étape d) de traitement de la structure de maintien (30) destinée à protéger ladite structure de maintien (30) de l'humidité, l'étape d) comprend notamment l'application d'un vernis sur ladite structure de maintien (30).

10. Procédé d'assemblage d'un échangeur (100) à double flux de gaz pourvu d'éléments d'échange fabriqués selon le procédé selon l'une des revendications 1 à 9, les éléments d'échange (110) comprenant des premiers éléments (110₁) et des deuxièmes éléments (110₂), le procédé d'assemblage comprenant l'empilement, en alternance, selon une direction d'empilement, des premiers éléments et des deuxièmes éléments.

11. Procédé d'assemblage selon la revendication 10, dans lequel les premiers éléments et les deuxièmes éléments présentent, en section selon un plan transversal auxdits éléments, une forme de ligne brisée, la ligne brisée relative à un premier élément, dite première ligne brisée, comprend des premiers creux (23c1) et des premières crêtes (22c1), se propageant selon une direction, dite direction d'élongation, perpendiculaire au plan transversal, selon, respectivement, des premières lignes de creux et des premières lignes de crête, et la ligne brisée relative à un deuxième élément, dite deuxième ligne brisée, comprend des deuxièmes creux et des deuxièmes crêtes, se propageant selon la direction d'élongation selon, respectivement, des premières lignes de creux et des premières lignes de crête.

12. Procédé selon la revendication 11, dans lequel les premières lignes de crête d'un premier élément sont jointes aux deuxièmes lignes de crêtes d'un deuxième élément directement consécutif audit premier élément de sorte qu'une pluralité de canaux soit formée entre ledit premier élément et ledit deuxième élément, avantageusement, la première ligne brisée et la deuxième ligne brisée sont agencées pour que les canaux (C) présentent une section de forme carrée ou rectangulaire, ou parallélépipédique.

13. Procédé selon la revendication 11 ou 12, dans lequel le procédé comprend en outre l'assemblage d'un autre élément d'échange, dit troisième élément d'échange, plan et fabriqué selon le procédé selon l'une des revendications 1 à 10, ledit troisième élément étant intercalé lors de l'assemblage entre un premier élément et un deuxième élément, ledit troisième élément étant conformé pour qu'une première pluralité de canaux (C1)et une deuxième pluralité de canaux (C2) soient formées, respectivement, entre ledit premier élément et ledit troisième élément d'une part, et ledit troisième éléments, et ledit deuxième élément d'autre part.

14. Procédé selon l'une des revendications 12 à 13, dans lequel l'un ou l'autre du premier élément et du deuxième élément comprend, au niveau de ses bords latéraux (120), des parois latérales destinées à refermer latéralement les deux canaux latéraux.

## Patentansprüche

1. Verfahren zum Herstellen eines Austauschelements eines Doppelgasstromtauschers, wobei das Verfahren die folgenden Schritte umfasst:
a) Positionieren einer Membran (10) auf einer Vorderseite (21) eines formgebenden Trägers (20), wobei die Membran (10) der Form der Vorderseite (21) entspricht, wobei die Membran (10) an der Vorderseite (21) des formgebenden Trägers (20) durch Ansaugen gehalten wird, so dass die Membran (10) die Form der Vorderseite (21) annimmt;
b) Bilden einer Haltestruktur (30), die an einer an der Vorderseite (21) angeformten freien Seite der Membran (10) haftet, durch additive Herstellung;
c) Entfernen des formgebenden Trägers (20), um das durch die Membran (10) und die Haltestruktur (30) gebildete Austauschelement freizugeben,
wobei die Vorderseite (21) gemäß einer Ebene senkrecht zu der Seite und der Querebene ein unterbrochenes Linienprofil aufweist, das Vertiefungen (23c) und Vorsprünge (22c) umfasst, wobei die Vertiefungen (23c) und die Vorsprünge (22c) sich in einer Richtung, der sogenannten Dehnungsrichtung, senkrecht zur Querebene entlang von Vertiefungslinien (23L) bzw. Vorsprungslinien (22L) ausbreiten, wobei das unterbrochene Linienprofil vorteilhafterweise ein Dreieckssignal ausweist.

2. Verfahren nach Anspruch 1, wobei Schritt b) das Bilden erster Streifen (31) auf den Vorsprungslinien (22L) und zweiter Streifen (32) auf den Vertiefungslinien (23L) und von Verbindungselementen (33) umfasst, die die ersten und die zweiten Streifen (32) direkt aufeinanderfolgend verbinden, wobei die ersten Streifen (31), die zweiten Streifen (32) und die Verbindungselemente (33) vorteilhafterweise eine Dicke zwischen 50 µm und (100) µm aufweisen.

3. Verfahren nach Anspruch 2, wobei Schritt b) durch ein Verfahren zum Sprühen eines fotopolymerisierbaren Materials durch eine oder mehrere Düsen (41) erfolgt, wobei das gesprühte fotopolymerisierbare Material anschließend durch Bestrahlung mit mindestens einer Quelle ultravioletter Strahlung (42₁) ausgehärtet wird.

4. Verfahren nach Anspruch 3, wobei die eine oder mehreren Düsen (41) erste Düsen (411) und zweite Düsen (412) umfassen, die dazu bestimmt sind, die ersten Streifen (31) bzw. die zweiten Streifen (32) zu bilden, wobei die ersten Düsen und/oder die zweiten Düsen vorteilhafterweise auch zum Bilden der Verbindungselemente eingesetzt werden.

5. Verfahren nach Anspruch 4, wobei die mindestens eine Quelle ultravioletter Strahlung eine Vielzahl von Quellen ultravioletter Strahlung umfasst, wobei jede Quelle ultravioletter Strahlung aus der Vielzahl vorteilhafterweise einer ersten Düse und einer zweiten Düse neben der ersten Düse zugeordnet ist.

6. Verfahren nach einem der Ansprüche 1 bis 5, wobei der formgebende Träger (20) ein poröses Material, insbesondere Keramik oder Kork, umfasst.

7. Verfahren nach einem der Ansprüche 1 bis 6, wobei die Membran (10) eine atmungsaktive und wasserdichte Membran (10) mit einer Dicke von weniger als 100 µm, vorteilhafterweise weniger als 15 µm, noch vorteilhafter weniger als 5 µm ist.

8. Verfahren nach einem der Ansprüche 1 bis 7, wobei dem Schritt b) ein Schritt a1) des Behandelns der freien Seite der Membran (10) vorangeht, der dazu bestimmt ist, die Haftung der Haltestruktur (30) auf der freien Seite zu fördern, wobei Schritt a1) insbesondere eine Behandlung durch elektrische Entladung vom Korona- oder Plasmatyp umfasst.

9. Verfahren nach einem der Ansprüche 1 bis 8, wobei dem Schritt b) ein Schritt d) des Behandelns der Haltestruktur (30) folgt, der dazu bestimmt ist, die Haltestruktur (30) vor Feuchtigkeit zu schützen, wobei Schritt d) insbesondere das Aufbringen eines Lacks auf die Haltestruktur (30) umfasst.

10. Verfahren zum Montieren eines Doppelgasstromtauschers (100), der mit Austauschelementen versehen ist, die nach dem Verfahren nach einem der Ansprüche 1 bis 9 hergestellt werden, wobei die Austauschelemente (110) erste Elemente (110₁) und zweite Elemente (110₂) umfassen, wobei das Montageverfahren das abwechselnde Stapeln der ersten Elemente und der zweiten Elemente in einer Stapelrichtung umfasst.

11. Montageverfahren nach Anspruch 10, wobei die ersten Elemente und die zweiten Elemente im Schnitt entlang einer quer zu den Elementen liegenden Ebene die Form einer unterbrochenen Linie aufweisen, wobei die unterbrochene Linie, die sich auf ein erstes Element bezieht, die sogenannte erste unterbrochene Linie, erste Vertiefungen (23c1) und erste Vorsprünge (22c1) umfasst, die sich in einer Richtung, die sogenannte Dehnungsrichtung, senkrecht zur Querebene entlang der Vertiefungslinien bzw. Vorsprungslinien ausbreiten, und die unterbrochene Linie, die sich auf ein zweites Element bezieht, die sogenannte zweite unterbrochene Linie, zweite Vertiefungen und zweite Vorsprünge umfasst, die sich jeweils in der Dehnungsrichtung entlang der Vertiefungslinien bzw. Vorsprungslinien ausbreiten.

12. Verfahren nach Anspruch 11, wobei die ersten Vorsprungslinien eines ersten Elements mit den zweiten Vorsprungslinien eines zweiten Elements, das direkt auf das erste Element folgt, verbunden werden, so dass eine Vielzahl von Kanälen zwischen dem ersten Element und dem zweiten Element gebildet wird, wobei vorteilhafterweise die erste unterbrochene Linie und die zweite unterbrochene Linie so angeordnet sind, dass die Kanäle (C) einen quadratischen oder rechteckigen oder parallelepipedischen Querschnitt aufweise.

13. Verfahren nach Anspruch 11 oder 12, wobei das Verfahren ferner die Montage eines weiteren Austauschelements, des sogenannten dritten Austauschelements, umfasst, das nach dem Verfahren nach einem der Ansprüche 1 bis 10 ausgelegt und hergestellt wird, wobei das dritte Element bei der Montage zwischen ein erstes Element und ein zweites Element eingefügt wird, wobei das dritte Element dementsprechend ist, dass eine erste Vielzahl von Kanälen (C1) und eine zweite Vielzahl von Kanälen (C2) sich schließen, die jeweils zwischen dem ersten Element und dem dritten Element einerseits und dem dritten Element und dem zweiten Element andererseits ausgebildet sind.

14. Verfahren nach einem der Ansprüche 12 bis 13, wobei das erste Element oder das zweite Element an seinen Seitenrändern (120) Seitenwände umfasst, die dazu bestimmt sind, die beiden Seitenkanäle seitlich zu verschließen.

## Claims

1. A method for manufacturing an exchange element of a dual gas flow exchanger, the method comprising the following steps:
a) positioning a membrane (10) on a front face (21) of a shaping support (20), the membrane (10) conforming to the shape of said front face (21), the membrane (10) being held on the front face (21) of the shaping support (20) by suction so that said membrane (10) matches the shape of the front face (21);
b) forming, by additive manufacturing, a holding structure (30) adhering to a free face of the membrane (10) shaped on the front face (21);
c) removing the shaping support (20) so as to release the exchange element formed by the membrane (10) and the holding structure (30),
wherein the front face (21) has, according to a plane perpendicular to said face and said transverse plane, a broken line profile which comprises troughs (23c) and crests (22c), the troughs (23c) and the crests (22c) propagating in a direction, called the direction of elongation perpendicular to the transverse plane, according, respectively, to trough lines (23L) and crest lines (22L), advantageously, the broken line profile has a triangle signal.

2. The method according to claim 1, wherein step b) comprises forming first strips (31) on the crest lines (22L) and second strips (32) on the trough lines (23L), and connecting members (33) connecting the first and second directly consecutive strips (32), advantageously, the first strips (31), the second strips (32) and the connecting members (33) have a thickness comprised between 50 µm and (100) µm.

3. The method according to claim 2, wherein step b) is done by a method for projecting a photopolymerisable material through one or more nozzles (41), said projected photopolymerisable material then hardens by exposure to at least one ultraviolet radiation source (42i).

4. The method according to claim 3, wherein the one or more nozzles (41) comprises first nozzles (411) and second nozzles (412) intended to form, respectively, the first strips (31) and the second strips (32), advantageously, the first nozzles and/or the second nozzles are also implemented for the formation of the connecting members.

5. The method according to claim 4, wherein the at least one ultraviolet radiation source comprises a plurality of ultraviolet radiation sources, advantageously each ultraviolet radiation source among said plurality is associated with a first nozzle and a second nozzle adjacent to said first nozzle.

6. The method according to one of claims 1 to 5, wherein the shaping support (20) comprises a porous material, in particular a ceramic or cork.

7. The method according to one of claims 1 to 6, wherein the membrane (10) is a waterproof-breathable membrane (10) with a thickness of less than 100 µm, advantageously less than 15 µm, even more advantageously less than 5 µm.

8. The method according to one of claims 1 to 7, wherein step b) is preceded by a step a1) of treating the free face of the membrane (10) intended to promote the adhesion of the holding structure (30) on said free face, said step a1) comprising in particular a treatment by electric discharge of the corona or plasma type.

9. The method according to one of claims 1 to 8, wherein step b) is followed by a step d) of treatment of the holding structure (30) intended to protect said holding structure (30) from the moisture, step d) comprises in particular the application of a varnish on said holding structure (30).

10. A method for assembling a dual gas flow exchanger (100) provided with exchange elements manufactured according to the method according to one of claims 1 to 9, the exchange elements (110) comprising first elements (110₁) and second elements (110₂), the assembly method comprising stacking, alternately, along a stacking direction, the first elements and the second elements.

11. The assembly method according to claim 10, wherein the first elements and the second elements have, in section along a plane transverse to said elements, the shape of a broken line, the broken line relating to a first element, called the first broken line, comprises first troughs (23c1) and first crests (22c1), propagating along a direction, called the direction of elongation, perpendicular to the transverse plane, along, respectively, first trough lines and first crest lines, and the broken line relating to a second element, called the second broken line, comprises second troughs and second crests, propagating along the direction of elongation along, respectively, first trough lines and first crest lines.

12. The method according to claim 11, wherein the first crest lines of a first element are joined to the second crest lines of a second element directly consecutive to said first element so that a plurality of channels are formed between said first element and said second element, advantageously, the first broken line and the second broken line are arranged so that the channels (C) have a square or rectangular or parallelepipedal section.

13. The method according to claim 11 or 12, wherein the method further comprises the assembly of another exchange element, called third exchange element, which is flat and manufactured according to the method according to one of claims 1 to 10, said third element being interposed during assembly between a first element and a second element, said third element being shaped so that a first plurality of channels (C1) and a second plurality of channels (C2) are formed, respectively, between said first element and said third element on the one hand, and said third element, and said second element on the other hand.

14. The method according to one of claims 12 to 13, wherein either one of the first element and of the second element comprises, at its side edges (120), side walls intended to laterally close the two side channels.
